(19) Europäisches Patentamt
European Patent Office
Office européen des brevets

(11) **EP 2 957 871 B1**

(12) # FASCICULE DE BREVET EUROPEEN

(45) Date de publication et mention de la délivrance du brevet:
**03.05.2017 Bulletin 2017/18**

(51) Int Cl.:
***G05D 1/10*** (2006.01) ***G01C 23/00*** (2006.01)
***G08G 5/00*** (2006.01)

(21) Numéro de dépôt: **15170522.5**

(22) Date de dépôt: **03.06.2015**

(54) **PROCÉDÉ DE PRÉDICTION D'UNE TRAJECTOIRE COURT TERME D'UN AÉRONEF, PRODUIT PROGRAMME D'ORDINATEUR, DISPOSITIF DE PRÉDICTION, PROCÉDÉ DE GUIDAGE, SYSTÈME DE GUIDAGE ET AÉRONEF ASSOCIÉS**

VERFAHREN ZUM VORHERSAGEN EINER KURZZEIT-FLUGBAHN EINES LUFTFAHRZEUGS, ENTSPRECHENDES COMPUTERPROGRAMM, ENTSPRECHENDE VORHERSAGEVORRICHTUNG, LENKVERFAHREN UND -SYSTEM UND ENTSPRECHENDES LUFTFAHRZEUG

METHOD OF PREDICTION OF AN AIRCRAFT SHORT TERM FLIGHT PATH, COMPUTER PROGRAM PRODUCT, ASSOCIATED PREDICTION DEVICE, GUIDANCE METHOD, GUIDANCE SYSTEM AND AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.06.2014 FR 1401357**

(43) Date de publication de la demande:
**23.12.2015 Bulletin 2015/52**

(73) Titulaire: **THALES**
**92400 Courbevoie (FR)**

(72) Inventeurs:
- **LISSAJOUX, Sylvain**
  **31000 TOULOUSE (FR)**
- **BADATCHEFF, Alexandre**
  **18000 BOURGES (FR)**
- **CLAYBROUGH, Matthieu**
  **31000 TOULOUSE (FR)**

(74) Mandataire: **Lavoix**
**2, place d'Estienne d'Orves**
**75441 Paris Cedex 09 (FR)**

(56) Documents cités:
**US-A- 5 920 321**
**US-A1- 2008 161 982**
**US-A1- 2011 196 549**
**US-B2- 8 086 362**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 957 871 B1

## Description

La présente invention concerne un procédé de prédiction d'une trajectoire court terme d'un aéronef, la trajectoire de l'aéronef étant associée à chaque instant temporel à un vecteur comportant au moins une composante parmi une position de l'aéronef, des attitudes de l'aéronef et les dérivées temporelles d'ordre 1 et 2 desdites position et attitudes, la trajectoire court terme étant la trajectoire de l'aéronef pour une période temporelle allant jusqu'à 30 secondes à compter d'une date de calcul de ladite trajectoire, le procédé comportant :

- une étape d'acquisition d'un signal de commande représentatif d'un débattement d'un organe primaire de commande de l'aéronef ;
- une étape de prédiction à une date de prédiction ultérieure d'au moins une composante de la trajectoire court terme de l'aéronef, l'étape de prédiction étant effectuée à la date de calcul.

L'invention concerne également un produit programme d'ordinateur comportant des instructions logicielles qui, lorsqu'elles sont mises en oeuvre par un ordinateur, mettent en oeuvre un tel procédé.

L'invention concerne également un dispositif de prédiction mettant en oeuvre un tel procédé.

L'invention concerne également un procédé de guidage d'un aéronef.

L'invention concerne également un système de guidage mettant en oeuvre un tel procédé de guidage.

L'invention concerne également un aéronef comportant un tel dispositif.

L'invention s'applique au domaine de l'aide au guidage d'un aéronef, notamment à la prédiction d'une trajectoire court terme.

Par « trajectoire de l'aéronef », on entend un vecteur comportant au moins une composante parmi une position de l'aéronef, des attitudes de l'aéronef et les dérivées temporelles d'ordre 1 et 2 desdites position et attitudes. Ces dérivées d'ordre 1 et 2 correspondent alors aux vitesses de translation, aux vitesses angulaires, aux accélérations et aux accélérations angulaires.

Par « prédiction d'une trajectoire court terme », on entend la prédiction à une date de calcul T, de tout ou partie des composantes du vecteur associé à la trajectoire de l'aéronef à une date de prédiction T' postérieure à la date de calcul T, la date de prédiction T' étant comprise dans une période temporelle allant jusqu'à 30 secondes à compter de la date de calcul T de ladite trajectoire.

De façon classique, le pilote d'un aéronef commande l'appareil en utilisant principalement un ou plusieurs organes primaires de commande, généralement un manche (ou « yoke » en anglais) ou un mini-manche (ou « side-stick » en anglais) et/ou une ou plusieurs manettes des gaz. Via l'actionnement du ou de chaque organe primaire de commande, le pilote commande un changement d'attitude de l'aéronef, ou provoque une augmentation de la poussée d'un ou des réacteurs de l'appareil, ce qui a pour effet de modifier la trajectoire de l'aéronef.

Généralement, le pilote utilise ses propres sensations, par exemple l'accélération qu'il ressent lors de l'actionnement des organes primaires de commande ou encore l'évolution de ses références visuelles, ainsi que son expérience du vol pour anticiper la trajectoire à venir et pour rectifier cette trajectoire jusqu'à amener l'aéronef vers la trajectoire souhaitée.

Toutefois, le pilote n'a généralement aucune indication explicite concernant la conséquence à court terme, sur la trajectoire de l'aéronef, d'une action sur les organes primaires de commande.

US 8,086,362 B2 décrit un procédé de prédiction de la trajectoire d'un aéronef à partir de consignes d'un pilote de l'aéronef, et d'affichage de la trajectoire prédite.

Durant la mise en oeuvre de ce procédé, la valeur des consignes pour le calcul de la trajectoire est considérée comme constante et égale à la valeur de la consigne à une date de calcul donnée.

Lorsque la manoeuvre n'est pas réalisée à consigne constante, par exemple à roulis constant, la trajectoire prédite diffère parfois de manière importante de la trajectoire réelle à venir.

On connait également US 5 920 321 décrivant un procédé de prédiction d'une trajectoire tridimensionnelle d'un aéronef en utilisant des informations issues d'un système de gestion de vol.

Un but de l'invention est donc d'améliorer la prédiction de la trajectoire de l'aéronef, notamment la prédiction de la trajectoire court terme.

A cet effet, l'invention a pour objet un procédé de prédiction d'une trajectoire court terme d'un aéronef conforme à la revendication 1.

En effet, le calcul, à partir du signal de commande, d'une estimation des variations au cours du temps d'une dérivée temporelle de la ou chaque composante prédite fournit une prédiction plus fiable de la trajectoire court terme de l'aéronef.

Suivant d'autres aspects avantageux de l'invention, le procédé comporte une ou plusieurs des caractéristiques des revendications 2 à 7.

L'invention a également pour objet un produit programme d'ordinateur comportant des instructions logicielles qui, lorsqu'elles sont mises en oeuvre par un ordinateur, mettent en oeuvre le procédé tel que défini ci-dessus.

L'invention a également pour objet un dispositif de prédiction d'une trajectoire court terme d'un aéronef conforme à la revendication 9.

L'invention a également pour objet un procédé de guidage d'un aéronef conforme à la revendication 10.

Suivant d'autres aspects avantageux de l'invention, le procédé de guidage comporte une ou plusieurs des caractéristiques des revendications 11 et 12.

L'invention a également pour objet un système de guidage d'un aéronef conforme à la revendication 13.

L'invention a également pour objet un aéronef conforme à la revendication 14.

Suivant un autre aspect avantageux de l'invention, l'aéronef comporte la caractéristique de la revendication 15.

L'invention sera mieux comprise à l'aide de la description qui va suivre, donnée uniquement à titre d'exemple non limitatif, et faite en se référant aux dessins annexés sur lesquels :

- la figure 1 est une représentation schématique d'un système de guidage d'un aéronef selon l'invention, le système de guidage comportant trois modules de prédiction de la trajectoire court terme ;
- la figure 2 est une représentation schématique d'une des modules de prédiction de la figure 1 ;
- la figure 3 est un organigramme d'un procédé de guidage de l'aéronef, mis en oeuvre par le système de la figure 1 ;
- la figure 4 est un détail d'une étape du procédé de la figure 3 ; et
- la figure 5 est une représentation schématique des projections des vecteurs d'une base liée à l'aéronef dans une base de référence.

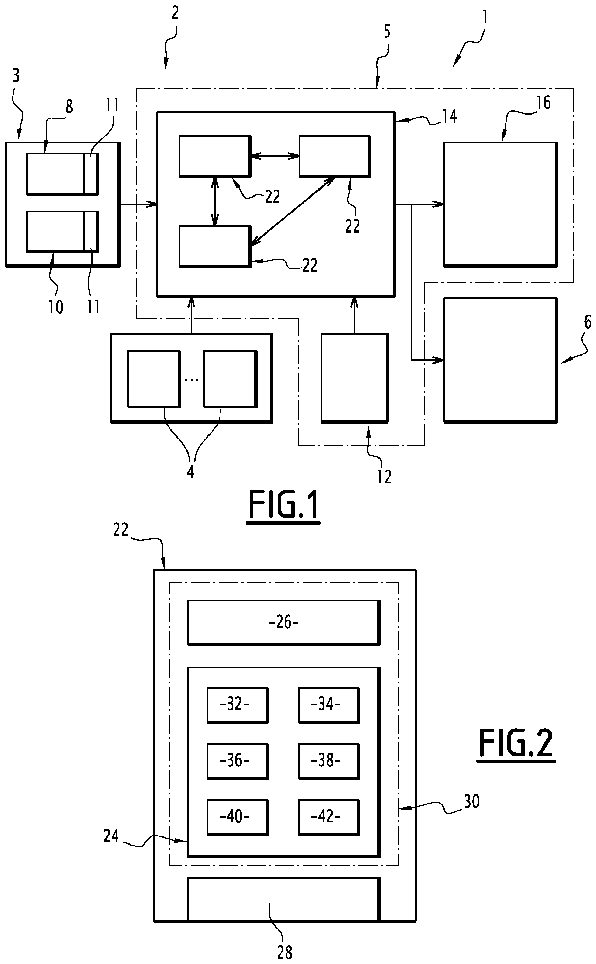

Sur la figure 1, un aéronef 1 comprend un système de guidage 2, des organes primaires de commande 3 et une pluralité de capteurs 4.

Le système de guidage 2 représenté sur la figure 1 est adapté pour asservir la trajectoire d'un aéronef 1 par rapport à une trajectoire court terme prédéterminée.

De préférence, le système de guidage 2 est embarqué à bord de l'aéronef 1.

Le système de guidage 2 comporte un dispositif 5 de prédiction de la trajectoire court terme de l'aéronef 1, encore appelée trajectoire court terme prédite. Le système de guidage 2 comporte également un dispositif 6 d'asservissement de la trajectoire de l'aéronef 1 sur la trajectoire court terme prédite par le dispositif de prédiction 5.

Les organes primaires de commande 3 comportent un ou plusieurs manches ou mini-manches 8 et un ou plusieurs organes 10 de commande de la poussée et optionnellement de la trainée de l'aéronef 1. Par la suite, le terme « manche » désignera indifféremment un manche ou un mini-manche.

Chaque organe primaire de commande 3 comporte un dispositif d'acquisition 11 propre à convertir une commande appliquée par un utilisateur sur l'organe primaire de commande 3 en un signal de commande représentatif de la commande appliquée. Une telle commande est par exemple une commande de variation d'une composante de la trajectoire de l'aéronef 1. Un tel système est communément appelé « commandes de vol électriques » (en anglais « fly by wire »).

En variante, les organes primaires de commande de 3 sont adaptés pour convertir une action exercée par l'utilisateur sur les organes primaires de commande 3 en une action mécanique sur un actionneur de l'aéronef 1. Un tel actionneur est par exemple une gouverne aérodynamique. Un tel système est communément appelé « commande de vol mécanique ». L'aéronef 1 comporte alors des systèmes de conversion (non représentés) propres à convertir une commande appliquée par un utilisateur sur l'organe primaire de commande 3 en un signal de commande représentatif de la commande appliquée.

Le manche 8 est adapté pour permettre à un utilisateur de piloter les attitudes de l'aéronef 1, par exemple en commandant un taux de roulis et un facteur de charge de l'aéronef 1.

Par « taux de roulis », on entend la vitesse angulaire associée à l'angle de roulis, c'est-à-dire la dérivée temporelle de l'angle de roulis, l'angle de roulis étant défini ultérieurement.

Par « facteur de charge », on entend le rapport entre le poids apparent de le l'aéronef 1 et la norme de son poids réel, projeté sur un axe de référence vertical $z_1$ défini ultérieurement.

De façon classique, le manche est adapté pour être actionné selon des mouvements transversaux, des mouvements longitudinaux ou toute combinaison de mouvements transversaux et longitudinaux.

Plus précisément, le manche 8 est adapté pour permettre à un utilisateur de commander le taux de roulis par des mouvements transversaux du manche 8. En outre, le manche 8 est adapté pour permettre à un utilisateur de commander le facteur de charge par des mouvements longitudinaux du manche 8.

De façon classique, l'organe de commande 10 est adapté pour permettre à l'utilisateur de fixer une puissance via, par exemple, un niveau de poussée, un régime moteur, un débit de combustible, un pas d'hélice ou de rotor. Par exemple, l'organe 10 de commande de la poussée comporte une ou plusieurs manettes des gaz.

Les capteurs 4 sont chacun propres à fournir au moins une donnée relative à la configuration de l'aéronef 1 ou aux paramètres physiques de l'air à proximité de l'aéronef 1, par exemple la température de l'air, sa pression, ou encore sa vitesse par rapport à l'aéronef 1.

Avantageusement, les capteurs 4 comprennent des capteurs propres à fournir une information relative à la position de l'aéronef 1, aux attitudes de l'aéronef 1, aux dérivées d'ordre 1 et 2 par rapport au temps de la position et des attitudes de l'aéronef 1.

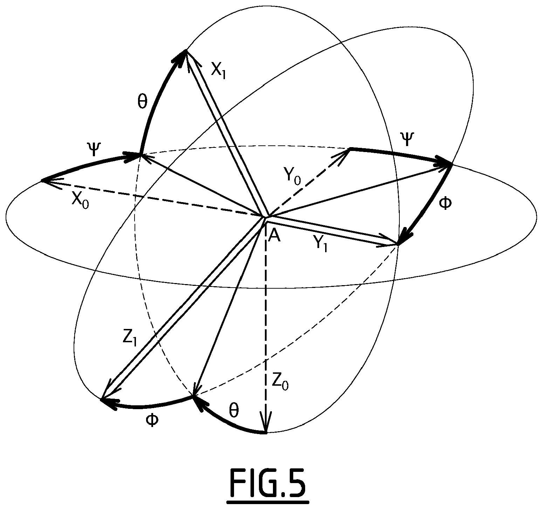

Par « attitudes », on entend au sens de l'invention, les angles orientés pris entre des axes prédéterminés de l'aéronef 1, dits axes aéronef, et leur projection sur des plans de référence. Parmi les attitudes, on distingue l'angle de roulis, l'angle de tangage et le cap, connus en soi et rappelés ci-après, en référence à la figure 5.

Les plans de référence sont déterminés à partir de trois axes de référence.

Les axes aéronef et les axes de référence sont concourants en un point prédéterminé A de l'aéronef 1, par exemple proche du centre de gravité de l'aéronef 1.

Les axes de référence sont les axes du référentiel terrestre local et comprennent un axe de référence vertical $z_0$, un axe de référence longitudinal $x_0$ et un axe de référence transversal $y_0$, formant une base orthonormée directe $(x_0,y_0,z_0)$ dite « base de référence ».

L'axe de référence vertical $z_0$ est un axe orienté suivant la direction descendante du champ de pesanteur local et passant par le point prédéterminé A de l'aéronef 1. L'axe de référence longitudinal $x_0$ est un axe orienté dans une direction prédéterminée, par exemple vers le Nord magnétique ou géographique, et orthogonal à l'axe de référence vertical $z_0$. L'axe de référence transversal $y_0$ complète $z_0$ et $x_0$ pour former la « base de référence ».

Les axes de référence vertical $z_0$ et longitudinal $x_0$ forment un plan de référence vertical. Les axes de référence transversal $y_0$ et longitudinal $x_0$ forment un plan de référence horizontal.

Les axes aéronef comprennent un axe aéronef longitudinal $x_1$, un axe aéronef vertical $z_1$ et un axe aéronef transversal $y_1$, formant une base orthonormée directe $(x_1,y_1,z_1)$ dite « base aéronef ».

L'axe aéronef longitudinal $x_1$ est un axe orienté vers l'avant de l'aéronef 1, passant par le point prédéterminé A et appartenant à un plan de symétrie de l'aéronef 1. Le plan de symétrie de l'aéronef 1 est généralement lié à la définition géométrique de la cellule de l'aéronef 1. L'axe aéronef transversal $y_1$ est l'axe perpendiculaire au plan de symétrie et orienté vers la droite de l'aéronef 1, c'est-à-dire la droite d'un observateur à bord de l'aéronef 1 et regardant vers l'avant de l'aéronef 1. L'axe aéronef vertical $z_1$ complète $y_1$ et $x_1$ pour former la « base aéronef ».

L'angle $\Phi$ entre l'axe aéronef transversal $y_1$ et le plan de référence horizontal est l'angle de roulis. L'angle $\theta$ entre l'axe aéronef longitudinal $x_1$ et le plan de référence horizontal est l'angle de tangage. L'angle $\psi$ entre l'axe aéronef longitudinal $x_1$ et le plan de référence vertical est le cap. $\Phi$, $\theta$ et $\psi$ sont généralement appelés les angles d'Euler permettant de passer de la base aéronef à la base de référence.

Avantageusement, les capteurs 4 comprennent également des capteurs propres à fournir une information relative à la position d'éléments mécaniques de l'aéronef 1, par exemple la position d'une gouverne, la configuration et l'état du ou des moteurs.

Avantageusement, les capteurs 4 comprennent en outre des capteurs propres à réaliser des mesures de la vitesse relative à l'air de l'aéronef 1, telles que des mesures de la vitesse vraie TAS (de l'anglais « True Airspeed »), la vitesse conventionnelle CAS (de l'anglais « Calibrated Airspeed » ou « Computed Airspeed ») la vitesse Mach ou encore les altitudes. De tels capteurs sont par exemple des systèmes ADU (de l'anglais « Air Data Unit »).

Les capteurs 4 de l'aéronef 1 sont par exemple intégrés dans un système AHRS (de l'anglais « Attitude and Heading Reference System ») ou IRS (de l'anglais « Inertial Reference System »). Avantageusement, ces capteurs sont propres à mesurer les vitesses dans la base de référence ainsi que la position géographique de l'aéronef 1.

Avantageusement, les capteurs 4 comportent des capteurs GPS et/ou un radioaltimètre.

Le dispositif de prédiction 5 comporte une mémoire 12. Le dispositif de prédiction 5 comporte également un calculateur 14 pour calculer la trajectoire court terme de l'aéronef 1 à partir de l'action d'un utilisateur sur tout ou partie des organes primaires de commande 3, ainsi qu'à partir de données stockées dans la mémoire 12 et/ou en provenance du ou de chaque capteur 4.

Le dispositif de prédiction 5 comporte en outre un afficheur 16 propre à afficher, avantageusement à destination de l'utilisateur, la trajectoire court terme prédite par le calculateur 14. En variante, l'afficheur est distinct du système de guidage 2 ou du dispositif de prédiction 5.

La mémoire 12 est adaptée pour stocker une pluralité de données relatives à l'aéronef 1, par exemple des données relatives aux performances de l'aéronef 1, ou encore des données relatives à une ou plusieurs configurations de l'aéronef 1 qui sont autorisées, encore appelées « domaine de vol ». Par exemple, le domaine de vol comprend les angles de roulis et de tangage (définis ci-après) minimaux et maximaux autorisés pour l'aéronef 1 à un instant donné. Le domaine de vol dépend par exemple de la phase de vol de l'aéronef 1, ou encore de l'altitude de l'aéronef 1.

Le calculateur 14 est adapté pour calculer, à une date de calcul T, une prédiction de la trajectoire de l'aéronef 1 à une date de prédiction T', postérieure à la date de calcul T.

Le calculateur 14 comporte une pluralité de modules de prédiction 22. Par exemple, le calculateur 14 comporte trois modules de prédiction 22.

En variante, le calculateur 14 comporte un unique module de prédiction 22.

L'afficheur 16 est par exemple un afficheur ou viseur tête haute (HUD ou HMD, de l'anglais « Head-Up Display » ou « Helmet Mounted Display »), ou tout écran du cockpit (par exemple un PFD, de l'anglais « Primary Flight Display »).

Les modules de prédiction 22 sont propres à communiquer entre eux, par exemple via un bus partagé.

Chaque module de prédiction 22 est propre à calculer, à la date de calcul T, à partir du signal de commande ou d'une transformée du signal de commande telle que définie ultérieurement, une estimation de la valeur, à la date de prédiction T' ultérieure, de toute ou partie des composantes de la trajectoire de l'aéronef 1.

Notamment, au moins un module de prédiction 22 est propre à calculer, à partir du signal de commande ou d'une transformée du signal de commande, une estimation de la valeur, à la date de prédiction T' ultérieure, d'au moins une dérivée temporelle.

De préférence, chaque module de prédiction 22 est propre à calculer, à partir du signal de commande, la variation, entre la date de calcul T et la date de prédiction T', de l'angle de roulis, et/ou de la pente et/ou du module de la vitesse air (TAS ou CAS ou Mach) et/ou le module de la vitesse sol (« ground speed » en anglais) de l'aéronef 1. Par « vitesse sol », on entend la projection du vecteur-vitesse de l'aéronef 1 sur le plan ($x_0$, $y_0$) formé par les axes $x_0$ et $y_0$.

Par « pente », on entend l'angle entre le plan horizontal de référence et le vecteur-vitesse sol de l'aéronef 1.

Dans l'exemple de la figure 1, un premier module de prédiction 22 est adapté pour calculer une estimation de la variation de l'angle de roulis.

Un deuxième module de prédiction 22 est adapté pour calculer une estimation de la variation de la pente.

Un troisième module de prédiction 22 est adapté pour calculer une estimation de la variation de la vitesse longitudinale.

De façon optionnelle, chaque module de prédiction 22 est propre à d'abord calculer une première estimation, dite « estimation préliminaire », de la variation au cours du temps de la composante correspondante de la trajectoire de l'aéronef 1.

Chaque module de prédiction 22 est alors propre à calculer, à partir de tout ou partie des estimations préliminaires, une estimation corrigée de la composante correspondante de la trajectoire de l'aéronef 1.

Avantageusement, chaque module de prédiction 22 est propre à convertir le signal de commande en une consigne, puis à calculer une estimation de la variation de la composante correspondante de la trajectoire de l'aéronef 1 à partir de la consigne.

Avantageusement, chaque module de prédiction 22 est propre à convertir le signal de commande en une consigne de facteur de charge et/ou de taux de roulis et/ou d'accélération longitudinale, puis à calculer une estimation de la variation de ladite composante de la trajectoire de l'aéronef 1 à partir de ladite ou desdites consignes.

Selon la variante où le calculateur 14 comporte un unique module de prédiction 22, le module de prédiction 22 est adapté pour calculer, à partir du signal de commande, une estimation de la variation, entre la date de calcul T et la date de prédiction T', de l'accélération longitudinale et du facteur de charge et du taux de roulis.

L'unique module de prédiction 22 est en outre adapté pour calculer, à partir du signal de commande, la variation, entre la date de calcul T et la date de prédiction T', de la vitesse longitudinale, et/ou de la pente et/ou de l'angle de roulis, respectivement à partir de la variation prédite de l'accélération longitudinale et/ou du facteur de charge et/ou du taux de roulis.

Dans l'exemple de réalisation décrit, chaque module de prédiction 22 comporte une mémoire 24, un processeur 26 et un émetteur-récepteur 28, la mémoire 24 et le processeur 26 formant une unité 30 de traitement d'informations.

La mémoire 24 est propre à stocker un logiciel 32 de lecture de données, un logiciel de conversion 34, un logiciel de traitement 36, un logiciel 38 d'émission d'estimation, un logiciel 40 de réception d'estimation, et un logiciel de correction 42.

Le processeur 26 est propre à charger et à exécuter chacun des logiciels 32, 34, 36, 38, 40, 42.

L'émetteur-récepteur 28 est propre à émettre des estimations calculées par le module de prédiction 22 correspondant vers un autre module de prédiction 22 et/ou vers l'afficheur 16.

L'émetteur-récepteur 28 est en outre propre à recevoir des estimations calculées par d'autres modules de prédiction 22, et à recevoir des données en provenance de la mémoire 12 et des capteurs 4.

Le logiciel de lecture 32 est adapté pour lire les données stockées dans la mémoire 12 et les données émises par les capteurs 4, ainsi que pour lire le signal de commande émis par chacun des organes primaires de commande 3.

Le logiciel de conversion 34 est propre à convertir chaque signal de commande en une consigne, telle qu'une consigne d'accélération longitudinale, ou en une consigne de facteur de charge, ou en une consigne de taux de roulis, à partir de données lues par le logiciel de lecture 32 dans la mémoire 12 et/ou en provenance des capteurs 4.

Le logiciel de traitement 36 est propre à calculer, à partir du signal de commande converti par le logiciel de conversion 34, une estimation de la variation au cours du temps, depuis la date de calcul T jusqu'à la date de prédiction T', de la grandeur correspondant au signal de commande.

Le logiciel de traitement 36 est également propre à calculer la transformée du signal de commande via une transformation prédéterminée. Une telle transformation a pour but de fournir un signal représentatif d'une estimation en au moins une date postérieure T* à la date de calcul T, tel qu'en des dates antérieure et postérieure à la date de prédiction T', de l'évolution future du signal de commande à partir de la valeur du signal de commande en au moins une date antérieure ou égale à la date de calcul T.

Par exemple, un filtre est appliqué au signal de commande.

Par exemple, dans le cas de signaux continus, le filtre est un filtre linéaire de fonction de transfert H prédéterminée.

Par exemple, dans le cas de signaux discrets, chaque échantillon de la transformée du signal de commande est fonction d'un ou de plusieurs échantillons du signal de commande et d'un ou de plusieurs échantillons précédents de la transformée du signal de commande.

Avantageusement, la fonction de transfert H est la fonction de transfert d'un filtre présentant une phase positive dans une bande de fréquences prédéterminée. Avantageusement, le filtre de fonction de transfert H présente une phase positive dans la bande de fréquences comprise entre 0 Hz et 20 Hz, de préférence comprise entre 0 Hz et 10 Hz, de préférence encore comprise entre 0 Hz et 5 Hz.

La fonction de transfert H est par exemple la fonction de transfert d'un filtre passe-haut.

Par exemple, dans le cas de signaux continus, dans le domaine de Laplace, une expression simple d'un filtre passe-haut H s'écrit :

$$H(p) = \frac{G}{1 + Kp}$$

où les coefficients G, K sont les coefficients de la fonction de transfert H.

La valeur de tout ou partie des coefficients G, K de la fonction de transfert H varie en fonction des données fournies par les capteurs 4. Les différentes valeurs autorisées pour les coefficients G, K sont stockées dans la mémoire 12.

Par exemple, pour la prédiction du taux de roulis ou du facteur de charge, la fonction de transfert H s'écrit :

$$H(p) = \frac{1}{1 + p}$$

Dans le cas de signaux discrets, la relation entre les échantillons en entrée et en sortie du filtre se déduit classiquement des expressions précédentes de la fonction de transfert H.

Lorsqu'il est exécuté, le logiciel de traitement 36 est adapté pour modifier les valeurs des coefficients G, K en fonction des données fournies par les capteurs 4 et lues par le logiciel de lecture 32.

Le logiciel de traitement 36 est en outre adapté pour calculer une intégrale par rapport au temps d'un signal dépendant du signal de commande, et pour ajouter la valeur de l'intégrale calculée à la valeur courante de la grandeur correspondante.

Le logiciel d'émission 38 est propre à émettre une estimation issue du module de prédiction 22 correspondant vers un autre module de prédiction 22. De préférence, le logiciel 38 est propre à émettre une estimation préliminaire vers les autres modules de prédiction 22.

Le logiciel de réception 40 d'un module de prédiction 22 donné est propre à recevoir une estimation en provenance d'un autre module de prédiction 22.

Le logiciel de correction 42 est adapté pour corriger l'estimation calculée par le logiciel de traitement 36 du module de prédiction 22 correspondant, en cas de réception d'une estimation provenant d'un autre module de prédiction 22. Une telle correction traduit notamment la variation au cours du temps des angles entre les axes aéronef et les axes de référence, et donc la variation au cours du temps de la projection des vecteurs-vitesses de l'aéronef dans la base de référence. Une telle correction traduit également la variation au cours du temps des modules des vitesses de l'aéronef 1. Par exemple, une telle correction tient compte de la relation entre la vitesse verticale et la pente, et de la relation entre la vitesse verticale et la vitesse sol. Une telle correction traduit également par exemple la relation entre l'angle de roulis, la vitesse sol et un rayon de virage, le rayon de virage étant une notion connue de l'homme du métier.

Le logiciel de correction 42 est également adapté pour corriger l'estimation calculée en cas de variation de la valeur mesurée par un ou plusieurs capteurs 4 prédéterminés.

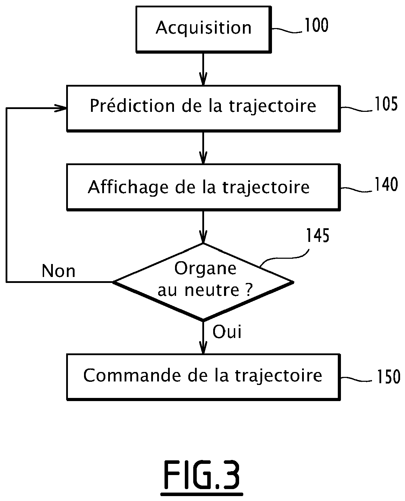

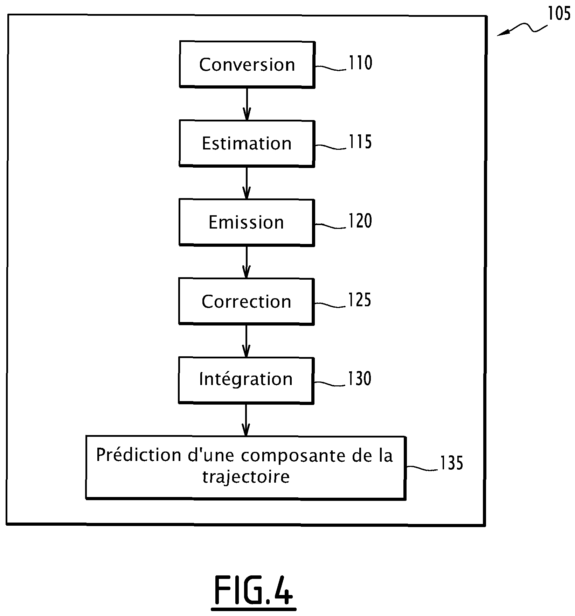

Le fonctionnement du système de guidage 2 va maintenant être décrit, en référence aux figures 3 et 4.

Durant la phase de vol de l'aéronef 1, l'utilisateur actionne, au cours d'une première étape 100, le manche 8 ou l'organe 10 de commande de la poussée.

Le dispositif d'acquisition 11 convertit la commande manuelle de l'utilisateur en un signal de commande.

Au cours d'une étape suivante 105, le calculateur 14 calcule à la date de calcul T, et à partir du signal de commande, une prédiction de la trajectoire court terme de l'aéronef 1 à la date de prédiction ultérieure T'. Notamment, le calculateur 14 calcule une prédiction de la vitesse longitudinale, de la pente et de l'angle de roulis de l'aéronef 1 à la date de prédiction T'.

Comme cela apparaît sur la figure 4, l'étape 105 comporte une pluralité de sous-étapes.

Au cours d'une sous-étape 110, le logiciel de lecture 32 de chaque module de prédiction 22 lit le signal de commande délivré par l'organe primaire de commande 3 associé au module de prédiction 22.

En outre, au cours de la sous-étape 110, le logiciel de lecture 32 lit les données fournies par les capteurs 4. Le logiciel de lecture 32 lit ensuite dans la mémoire 12 les coefficients G, K prédéterminés qui correspondent aux données reçues depuis les capteurs 4. Puis le logiciel de traitement 34 convertit le signal de commande en une consigne du paramètre associé au signal de commande, c'est-à-dire par exemple une consigne d'accélération longitudinale, ou une consigne de facteur de charge ou de taux de roulis.

Au cours d'une sous-étape suivante 115, le logiciel de lecture 32 lit dans la mémoire 12 les coefficients prédéterminés de la fonction de transfert H, correspondant aux données reçues depuis les capteurs 4 au cours de l'étape 110.

Ensuite, le logiciel de traitement 36 applique, à la consigne, le filtre prédéterminé, dont les coefficients sont les coefficients lus dans la mémoire 12 par le logiciel de lecture 32, pour calculer une estimation de la variation de la composante de la trajectoire correspondant au module de prédiction 22 parmi l'accélération longitudinale, le facteur de charge et le taux de roulis.

Au cours d'une sous-étape suivante 120, le logiciel 38 d'émission d'estimation émet l'estimation calculée au cours de l'étape 110 à destination des autres modules de prédiction 22.

Au cours d'une sous-étape suivante 125, et si le logiciel 40 de réception d'estimation a reçu une estimation provenant d'un autre module de prédiction 22, le logiciel de traitement 36 corrige l'estimation calculée précédemment.

Au cours d'une sous-étape suivante 130 d'intégration, le logiciel de traitement 36 calcule l'intégrale par rapport au temps de l'estimation de la composante de la trajectoire correspondant au module de prédiction 22 pour obtenir une variation de vitesse longitudinale ou de pente ou d'angle de roulis.

Par exemple, pour le module de prédiction 22 propre à calculer la variation de la pente, à l'issue de la sous-étape 130, le logiciel de traitement 36 aura calculé la variation de la pente de l'aéronef 1 entre de la date de calcul T et la date de prédiction T'.

Au cours d'une sous-étape suivante 135, le logiciel de traitement 36 calcule l'estimation de la composante correspondante de la trajectoire de l'aéronef 1 à la date de prédiction T' en additionnant la variation prédite de ladite composante à la valeur courante, à la date de calcul T, de la dite composante. La valeur courante de la composante correspondant au module de prédiction 22 est fournie par les capteurs 4 et lue par le logiciel de lecture 32.

Avantageusement, si la composante prédite est en dehors du domaine de vol, le logiciel de traitement 36 corrige la valeur de la variation prédite pour que la composante prédite correspondante ne soit plus en dehors du domaine de vol.

Au cours d'une étape suivante 140, l'afficheur 16 affiche toute ou partie de la trajectoire court terme prédite calculée par le calculateur 14 à l'issue de l'étape 105.

Si, à l'issue de l'étape d'affichage 140, l'utilisateur place, lors d'une étape 145, les organes primaires de commande 3 dans une position neutre prédéterminée, alors, au cours d'une étape suivante 150, le dispositif d'asservissement 6 commande l'aéronef 1 pour asservir sa trajectoire par rapport à la trajectoire prédite calculée par le calculateur à l'issue de l'étape 105. La trajectoire prédite forme alors une consigne de guidage destinée à être transmise au dispositif d'asservissement 6.

Avantageusement, la trajectoire prédite est figée, c'est-à-dire qu'elle n'est plus modifiée, dès lors qu'elle forme une consigne de guidage.

En variante, le manche 8 comporte une zone neutre longitudinale et une zone neutre transversale. La zone neutre longitudinale, respectivement la zone neutre transversale, représente une plage prédéfinie de débattement du manche 8 autour de son point d'équilibre suivant une direction longitudinale, respectivement transversale, telle qu'une plage de 5° centrée sur le point d'équilibre, c'est-à-dire autour de la position du manche 8 lorsqu'aucun effort n'est exercé sur le manche 8. Si le manche 8 est dans la zone neutre longitudinale, alors au cours de l'étape suivante 150, le dispositif d'asservissement 6 commande l'aéronef 1 pour asservir la pente par rapport à la pente prédite, calculée par le calculateur à l'issue de l'étape 105. Si le manche 8 est dans la zone neutre transversale, alors au cours de l'étape suivante 150, le dispositif d'asservissement 6 commande l'aéronef 1 pour asservir l'angle de roulis par rapport à l'angle de roulis prédit, calculé par le calculateur à l'issue de l'étape 105.

En variante, l'organe 10 de commande de la poussée comporte une zone neutre. La zone neutre représente une plage prédéfinie de débattement de l'organe de commande 10 autour d'une position prédéterminée, telle qu'une plage de 5° centrée sur la position prédéterminée. Si l'organe de commande 10 est dans la zone neutre, alors au cours de l'étape suivante 150, le dispositif d'asservissement 6 commande l'aéronef 1 pour asservir la vitesse longitudinale par rapport à la vitesse longitudinale prédite, calculée par le calculateur à l'issue de l'étape 105.

Sinon, le dispositif de prédiction 5 calcule de nouveau une estimation de la trajectoire court terme de l'aéronef 1, lors de l'étape 105.

En variante, la sous-étape d'intégration 130 précède la sous-étape d'estimation 115. Par conséquent, au cours de l'étape d'estimation 115, le logiciel de traitement 36 applique le filtre H à l'intégrale par rapport au temps du signal de commande. A l'issue de la sous-étape d'estimation 115, le logiciel de traitement 36 aura alors calculé la variation de la trajectoire de l'aéronef 1.

En variante encore, la sous-étape d'intégration 130 précède la sous-étape 125.

Ainsi, le calcul, à partir du signal de commande, d'une estimation des variations au cours du temps des dérivées temporelles de composantes prédites de la trajectoire de l'aéronef 1 fournit une aide au pilotage et améliore la sécurité du vol.

En outre, le calcul d'une estimation de la variation au cours du temps d'au moins une composante parmi le taux de roulis, le facteur de charge et l'accélération longitudinale de l'aéronef 1 fournit une prédiction encore plus fiable à court terme, la trajectoire étant en effet calculée à partir des variations prédites et non à partir d'une consigne constante comme cela est fait dans l'état de la technique.

En outre, le recours à une transformation du signal de commande, par exemple par un filtre dont la fonction de transfert présente une phase supérieure ou égale à zéro dans une bande de fréquence d'intérêt, délivre en sortie un signal en avance de phase par rapport au signal de commande. Ceci permet d'anticiper les variations du signal de commande et conduit à une meilleure prédiction de la trajectoire court terme.

En outre, le fait que la fonction de transfert H du filtre varie en fonction du temps, notamment en fonction de paramètres dépendant du type de l'aéronef 1 et/ou de grandeurs mesurées par les capteurs 4 de l'aéronef 1, permet d'améliorer la prédiction de la trajectoire en adaptant le filtre aux conditions de vol de l'aéronef 1.

## Revendications

**1.** Procédé de prédiction d'une trajectoire court terme d'un aéronef (1), la trajectoire de l'aéronef (1) étant associée à chaque instant temporel à un vecteur comportant au moins une composante parmi une position de l'aéronef (1), des attitudes de l'aéronef (1) et les dérivées temporelles d'ordre 1 et 2 desdites position et attitudes, la trajectoire court terme étant la trajectoire de l'aéronef (1) pour une période temporelle allant jusqu'à 30 secondes à compter d'une date de calcul (T) de ladite trajectoire, le procédé étant **caractérisé en ce qu'**il comporte :

- une étape (100) d'acquisition d'un signal de commande représentatif d'un débattement d'un organe primaire de commande (3, 8, 10) de l'aéronef (1) ;
- une étape (105) de prédiction à une date de prédiction (T') ultérieure d'au moins une composante de la trajectoire court terme de l'aéronef (1), l'étape de prédiction étant effectuée à la date de calcul (T) ;

l'étape de prédiction (105) comportant en outre le calcul (115), à partir du signal de commande, d'une estimation, entre la date de calcul (T) et une date de prédiction (T') ultérieure, d'au moins une dérivée temporelle d'au moins une composante prédite, la ou chaque dérivée temporelle estimée dépendant de la date de prédiction ultérieure (T') et du débattement de chaque organe primaire de commande (3, 8, 10).

**2.** Procédé selon la revendication 1, **caractérisé en ce que** l'étape de prédiction (105) comporte le calcul (130, 135) d'au moins une composante de la trajectoire court terme de l'aéronef (1) à partir de l'estimation calculée de la ou chaque dérivée temporelle correspondante.

**3.** Procédé selon la revendication 1 ou 2, **caractérisé en ce que** l'étape de prédiction (105) comporte en outre le calcul (115) d'une estimation de la variation entre la date de calcul (T) et la date de prédiction (T'), d'au moins une composante parmi l'angle de roulis, la vitesse longitudinale et la vitesse verticale de l'aéronef (1), et/ou d'au moins une grandeur additionnelle relative à l'aéronef (1) telle qu'un rayon de virage, une vitesse relative à l'air, ou une pente de l'aéronef (1).

**4.** Procédé selon l'une quelconque des revendications précédentes, **caractérisé en ce que** l'étape de prédiction (105) comprend la transformation (115) d'un premier signal dépendant du signal de commande en un deuxième signal représentatif d'une estimation de la valeur du premier signal en au moins une date (T*) postérieure à la date de calcul (T), à partir de la valeur du premier signal en au moins une date antérieure ou égale à la date de calcul (T).

**5.** Procédé selon la revendication 4, **caractérisé en ce que** la transformation (115) du signal dépendant du signal de commande est l'application audit signal d'un filtre présentant une fonction de transfert dont la phase est supérieure ou égale à zéro dans une bande prédéterminée de fréquences.

**6.** Procédé selon la revendication 5, **caractérisé en ce que** la fonction de transfert (H) du filtre varie en fonction du temps, de préférence en fonction du type de l'aéronef (1) et/ou de grandeurs dépendant du temps mesurées par au moins un capteur (4) de l'aéronef (1).

**7.** Procédé selon l'une quelconque des revendications précédentes, **caractérisé en ce que** l'étape de prédiction (105) comporte la modification (125) de l'estimation de la variation d'au moins une composante de la trajectoire court terme de l'aéronef (1) et/ou d'au moins une grandeur additionnelle, telle qu'un rayon de virage, une vitesse relative à l'air, ou une pente de l'aéronef (1), en fonction d'au moins une estimation de la variation d'une autre composante de la trajectoire court terme de l'aéronef (1) et/ou d'une autre grandeur additionnelle, telle qu'un rayon de virage, une vitesse relative à l'air, ou une pente de l'aéronef (1).

**8.** Produit programme d'ordinateur comportant des instructions logicielles qui, lorsqu'elles sont mises en oeuvre par un ordinateur, mettent en oeuvre le procédé selon l'une quelconque des revendications précédentes.

**9.** Dispositif (5) de prédiction d'une trajectoire court terme d'un aéronef, la trajectoire de l'aéronef (1) étant associée à chaque instant temporel à un vecteur comportant au moins une composante parmi une position de l'aéronef (1), des attitudes de l'aéronef (1) et les dérivées temporelles d'ordre 1 et 2 desdites position et attitudes, la trajectoire court terme étant la trajectoire de l'aéronef (1) pour une période temporelle allant jusqu'à 30 secondes à compter d'une date de calcul (T) de ladite trajectoire, le dispositif comportant :

- des moyens (11) d'acquisition d'un signal de commande représentatif d'une commande appliquée par un utilisateur à un organe de commande (3, 8, 10) de l'aéronef (1) ;
- au moins un module (22) de prédiction, à la date de calcul (T) d'au moins une composante de la trajectoire court terme de l'aéronef (1) ;

**caractérisé en ce que** le ou chaque module de prédiction (22) est adapté en outre pour calculer, à partir du signal de commande, une estimation, entre la date de calcul (T) et une date de prédiction (T') ultérieure, d'au moins une dérivée temporelle de la ou chaque composante prédite, la ou chaque dérivée temporelle estimée dépendant de la date de prédiction ultérieure (T') et du débattement de chaque organe primaire de commande (3, 8, 10).

**10.** Procédé de guidage d'un aéronef (1), **caractérisé en ce qu'**il comporte les étapes suivantes :

- la prédiction d'une trajectoire court terme suivant le procédé selon l'une quelconque des revendications 1 à 7 ;
- l'asservissement d'au moins une composante de la trajectoire de l'aéronef (1) par rapport à la composante correspondante de la trajectoire prédite.

**11.** Procédé selon la revendication 10, **caractérisé en ce que** la ou chaque composante prédite de la trajectoire n'est plus modifiée durant l'étape d'asservissement et forme alors une consigne destinée à être transmise à un dispositif (6) d'asservissement de la trajectoire de l'aéronef (1).

**12.** Procédé selon la revendication 10 ou 11, **caractérisé en ce que** le ou chaque organe primaire de commande (3, 8, 10) est associé à au moins une composante de la trajectoire, **en ce que** le ou chaque organe primaire de commande (3, 8, 10) présente une zone neutre, la zone neutre représentant une plage prédéfinie de débattement de l'organe primaire de commande (3, 8, 10) autour d'une position prédéterminée de l'organe primaire de commande (3, 8, 10), et
**en ce que**, lorsqu'un organe primaire de commande (3, 8, 10) est positionné en position neutre suivant une ou plusieurs directions, la ou les composantes de la trajectoire de l'aéronef (1) associées auxdites directions sont asservies par rapport à la composante prédite correspondante de la trajectoire court terme.

**13.** Système (2) de guidage d'un aéronef (1), **caractérisé en ce qu'**il comporte :

- un dispositif de prédiction (5) selon la revendication 9, propre à prédire une trajectoire court terme de l'aéronef (1) ;
- un dispositif d'asservissement (6) propre à asservir la trajectoire de l'aéronef (1) par rapport à la trajectoire court terme prédite.

**14.** Aéronef, **caractérisé en ce qu'**il comporte au moins un organe de commande (3, 8, 10) et un dispositif de prédiction (5) selon la revendication 9 pour prédire la trajectoire court terme de l'aéronef (1) à partir d'une commande appliquée par un utilisateur au ou à chaque organe de commande (3, 8, 10).

**15.** Aéronef selon la revendication 14, **caractérisé en ce qu'**il comporte en outre un dispositif d'asservissement (6) pour asservir la trajectoire court terme de l'aéronef (1) par rapport à la trajectoire court terme prédite.

**Patentansprüche**

**1.** Verfahren zum Vorhersagen einer kurzzeitigen Flugbahn eines Luftfahrzeugs (1), wobei die Flugbahn des Luftfahrzeugs (1) zu jedem Zeitpunkt einem Vektor zugeordnet ist, der mindestens eine Komponente aus einer Position des Luftfahrzeugs (1), den Fluglagen des Luftfahrzeugs (1) und den zeitlichen Ableitungen der Ordnungen 1 und 2 der Position und der Fluglagen aufweist, wobei die kurzfristige Flugbahn die Flugbahn des Luftfahrzeugs (1) für einen Zeitraum beträgt, der bis zu 30 Sekunden ab einem Zeitpunkt der Berechnung (T) der Flugbahn beträgt, wobei das Verfahren **dadurch gekennzeichnet ist, dass** es Folgendes aufweist:

- einen Schritt (100) des Erfassens eines Steuersignals, das für einen Ausschlag eines primären Steuerorgans (3, 8, 10) des Luftfahrzeugs (1) repräsentativ ist;
- einen Schritt (105) des Vorhersagens zu einem nachfolgenden Zeitpunkt der Vorhersage (T') mindestens einer Komponente der kurzzeitigen Flugbahn des Luftfahrzeugs (1), wobei der Schritt des Vorhersagens zum Zeitpunkt der Berechnung (T) durchgeführt wird,

wobei der Schritt des Vorhersagens (105) ferner die Berechnung (115), ausgehend von dem Steuersignal, einer Schätzung, zwischen dem Zeitpunkt der Berechnung (T) und einem nachfolgenden Zeitpunkt der Vorhersage (T'), mindestens einer zeitlichen Ableitung mindestens einer vorhergesagten Komponente aufweist, wobei die oder jede geschätzte zeitliche Ableitung von dem nachfolgenden Zeitpunkt der Vorhersage (T') und dem Ausschlag jedes primären Steuerorgans (3, 8, 10) abhängt.

**2.** Verfahren nach Anspruch 1, **dadurch gekennzeichnet, dass** der Schritt des Vorhersagens (105) die Berechnung (130, 135) mindestens einer Komponente der kurzzeitigen Flugbahn des Luftfahrzeugs (1) ausgehend von der berechneten Schätzung der oder jeder entsprechenden zeitlichen Ableitung aufweist.

**3.** Verfahren nach Anspruch 1 oder 2, **dadurch gekennzeichnet, dass** der Schritt des Vorhersagens (105) ferner die Berechnung (115) einer Schätzung der Veränderung zwischen dem Zeitpunkt der Berechnung (T) und dem Zeitpunkt der Vorhersage (T') mindestens einer Komponente aus dem Rollwinkel, der Längsgeschwindigkeit und der Vertikalgeschwindigkeit des Luftfahrzeugs (1) und/oder mindestens einer zusätzlichen Größe bezüglich des Luftfahrzeugs (1), wie ein Kurvenradius, eine Geschwindigkeit relativ zur Luft oder eine Neigung des Luftfahrzeugs (1), aufweist.

**4.** Verfahren nach einem der vorhergehenden Ansprüche, **dadurch gekennzeichnet, dass** der Schritt des Vorhersagens (105) die Umwandlung (115) eines ersten Signals, das vom Steuersignal abhängt, in ein zweites Signal, das für eine Schätzung des Werts des ersten Signals zu mindestens einem Zeitpunkt (T*) nach dem Zeitpunkt der Berechnung (T) repräsentativ ist, ausgehend von dem Wert des ersten Signals zu mindestens einem Zeitpunkt vor oder gleich dem Zeitpunkt der Berechnung (T) umfasst.

**5.** Verfahren nach Anspruch 4, **dadurch gekennzeichnet, dass** die Umwandlung (115) des Signals, das vom Steuersignal abhängt, die Anwendung eines Filters auf das Signal ist, der eine Übertragungsfunktion aufweist, dessen Phase in einem vorbestimmten Frequenzband größer oder gleich null ist.

**6.** Verfahren nach Anspruch 5, **dadurch gekennzeichnet, dass** die Übertragungsfunktion (H) des Filters in Abhängigkeit von der Zeit, vorzugsweise in Abhängigkeit vom Typ des Luftfahrzeugs (1) und/oder von zeitabhängigen Größen, die durch mindestens einen Geber (4) des Luftfahrzeugs (1) gemessen werden, variiert.

**7.** Verfahren nach einem der vorhergehenden Ansprüche, **dadurch gekennzeichnet, dass** der Schritt des Vorhersagens (105) ferner die Änderung (125) der Schätzung der Veränderung mindestens einer Komponente der kurzzeitigen Flugbahn des Luftfahrzeugs (1) und/oder mindestens einer zusätzlichen Größe, wie ein Kurvenradius, eine Geschwindigkeit bezogen auf die Luft oder eine Neigung des Luftfahrzeugs (1), in Abhängigkeit von mindestens einer Schätzung der Veränderung einer anderen Komponente der kurzzeitigen Flugbahn des Luftfahrzeugs (1) und/oder mindestens einer zusätzlichen Größe, wie ein Kurvenradius, eine Geschwindigkeit relativ zur Luft oder eine Neigung des Luftfahrzeugs (1), aufweist.

**8.** Computerprogramm-Erzeugnis mit Softwareanweisungen, die, wenn sie durch einen Computer ausgeführt werden, das Verfahren nach einem der vorhergehenden Ansprüche ausführen.

**9.** Vohersagevorrichtung (5) einer kurzzeitigen Flugbahn eines Luftfahrzeugs, wobei die Flugbahn des Luftfahrzeugs (1) zu jedem Zeitpunkt einem Vektor zugeordnet ist, der mindestens eine Komponente aus einer Position des Luftfahrzeugs (1), den Fluglagen des Luftfahrzeugs (1) und den zeitlichen Ableitungen der Ordnungen 1 und 2 der Position und der Fluglagen aufweist, wobei die kurzfristige Flugbahn die Flugbahn des Luftfahrzeugs (1) für einen Zeitraum beträgt, der bis zu 30 Sekunden ab einem Zeitpunkt der Berechnung (T) der Flugbahn beträgt, wobei die Vorrichtung Folgendes aufweist:

- Mittel (11) zum Erfassen eines Steuersignals, das für einen Befehl, der von einem Benutzer einem Steuerorgan (3, 8, 10) des Luftfahrzeugs (1) erteilt wird, repräsentativ ist;
- mindestens ein Modul (22) zum Vorhersagen, zum Zeitpunkt der Berechnung (T), mindestens einer Komponente der kurzzeitigen Flugbahn des Luftfahrzeugs (1);

**dadurch gekennzeichnet, dass** das oder jedes Vorsagemodul (22) ferner dazu eingerichtet ist, ausgehend von dem Steuersignal, eine Schätzung, zwischen dem Zeitpunkt der Berechnung (T) und einem nachfolgenden Zeitpunkt der Vorhersage (T'), mindestens einer zeitlichen Ableitung der oder jeder vorhergesagten Komponente zu berechnen, wobei die oder jede geschätzte zeitliche Ableitung von dem nachfolgenden Zeitpunkt der Vorhersage (T') und dem Ausschlag jedes primären Steuerorgans (3, 8, 10) abhängt.

**10.** Verfahren zum Lenken eines Luftfahrzeugs (1), **dadurch gekennzeichnet, dass** es die folgenden Schritte aufweist:

- Vorhersagen einer kurzzeitigen Flugbahn gemäß dem Verfahren nach einem der Ansprüche 1 bis 7;
- Regeln mindestens einer Komponente der Flugbahn des Luftfahrzeugs (1) bezogen auf die entsprechende Komponente der vorhergesagten Flugbahn.

**11.** Verfahren nach Anspruch 10, **dadurch gekennzeichnet, dass** die oder jede vorhergesagte Komponente der Flugbahn während des Schrittes des Regelns nicht mehr geändert wird und so einen Sollwert bildet, die für die Übertragung an eine Vorrichtung (6) zur Regelung der Flugbahn des Luftfahrzeugs (1) bestimmt ist.

**12.** Verfahren nach Anspruch 10 oder 11, **dadurch gekennzeichnet, dass** das oder jedes primäre Steuerorgan (3, 8, 10) mindestens einer Komponente der Flugbahn zugeordnet ist, dass das oder jedes primäre Steuerorgan (3, 8, 10) eine neutrale Zone aufweist, wobei die neutrale Zone einen vordefinierten Bereich des Ausschlags des primären Steuerorgans (3, 8, 10) um eine vorbestimmte Position des primären Steuerorgans (3, 8, 10) darstellt, und dass, wenn ein primäres Steuerorgan (3, 8, 10) in neutraler Position in einer oder mehreren Richtungen positioniert ist, die Komponente(n) der Flugbahn des Luftfahrzeugs (1), die den Richtungen zugeordnet sind, bezogen auf die entsprechende Komponente der kurzzeitigen Flugbahn geregelt werden.

**13.** System (2) zum Lenken eines Luftfahrzeugs (1), **dadurch gekennzeichnet, dass** es Folgendes aufweist:

- eine Vorhersagevorrichtung (5) nach Anspruch 9, die zum Vorhersagen einer kurzzeitigen Flugbahn des Luftfahrzeugs (1) eingerichtet ist;
- eine Regelungsvorrichtung (6), die zum Regeln der Flugbahn des Luftfahrzeugs (1) bezogen auf die vorhergesagte kurzfristige Flugbahn eingerichtet ist.

**14.** Flugzeug, **dadurch gekennzeichnet, dass** es mindestens ein Steuerorgan (3, 8, 10) und eine Vorhersagevorrichtung (5) nach Anspruch 9 aufweist, um die kurzfristige Flugbahn des Luftfahrzeugs (1) ausgehend von einem Befehl vorherzusagen, der von einem Benutzer dem oder jedem Steuerorgan (3, 8, 10) erteilt wird.

**15.** Flugzeug nach Anspruch 14, **dadurch gekennzeichnet, dass** es ferner eine Regelungsvorrichtung (6) aufweist, um die kurzfristige Flugbahn des Luftfahrzeugs (1) bezogen auf die vorhergesagte kurzfristige Flugbahn zu regeln.

## Claims

**1.** A method for predicting a short-term flight path of an aircraft (1), the flight path of the aircraft (1) being associated at each time moment with a vector including at least one component from among a position of the aircraft (1), attitudes of the aircraft (1) and order 1 and 2 time derivatives of said position and attitudes, the short-term flight path being the flight path of the aircraft (1) for a time period up to 30 seconds from a computation date (T) of said flight path, the method being **characterized in that** it includes:

- an acquisition step (100) for acquiring a control signal representative of a displacement of a primary control member (3, 8, 10) of the aircraft (1);
- a prediction step (105) for predicting, on a subsequent prediction date (T'), at least one component of the short-term flight path of the aircraft (1), the prediction step being carried out on the computation date (T);

the prediction step (105) further including computing (115), from the control signal, an estimate, between the computation date (T) and a subsequent prediction date (T'), of at least one time derivative of at least one predicted component, the or each estimated time derivative depending on the subsequent prediction date (T') and on the displacement of each primary control member (3, 8, 10).

**2.** The method according to claim 1, **characterized in that** the prediction step (105) includes computing (130, 135) at least one short-term flight path component of the aircraft (1) from the computed estimate of the or each corresponding time derivative.

**3.** The method according to claim 1 or 2, **characterized in that** the prediction step (105) further includes computing (115) an estimate of the variation, between the computation date (T) and the prediction date (T'), of at least one component among the roll angle, the longitudinal speed and the vertical speed of the aircraft (1), and/or at least one additional property relative to the aircraft (1) such as a turning radius, an airspeed, or a gradient of the aircraft (1).

**4.** The method according to any one of the preceding claims, **characterized in that** the prediction step (105) comprises the conversion (115) of a first signal depending on the control signal into a second signal representative of an estimate of the value of the first signal on at least one date (T*) after the computation date (T), from the value of the first signal on at least one date prior or equal to the computation date (T).

**5.** The method according to claim 4, **characterized in that** the conversion (115) of the signal depending on the control signal is the application to said signal of a filter having a transfer function, the phase of which is greater than or equal to zero in a predetermined frequency band.

**6.** The method according to claim 5, **characterized in that** the transfer function (H) of the filter varies as a function of time, preferably based on the type of aircraft (1) and/or time-dependent properties measured by at least one sensor (4) of the aircraft (1).

**7.** The method according to any one of the preceding claims, **characterized in that** the prediction step (105) includes modifying (125) the estimate of the variation of at least one component of the short-term flight path of the aircraft (1) and/or at least one additional property, such as a turning radius, an airspeed, or a gradient of the aircraft (1), based on at least one estimate of the variation of another component of the short-term flight path of the aircraft (1) and/or another additional property, such as a turning radius, an airspeed, or a gradient of the aircraft (1).

**8.** A computer program product including software instructions which, when implemented by a computer, implement the method according to any one of the preceding claims.

**9.** A prediction device (5) for predicting a short-term flight path of an aircraft (1), the flight path of the aircraft (1) being associated at each time moment with a vector including at least one component from among a position of the aircraft (1), attitudes of the aircraft (1) and order 1 and 2 time derivatives of said position and attitudes, the short-term flight path being the flight path of the aircraft (1) for a time period up to 30 seconds from a computation date (T) of said flight path, the prediction device (5) including:

- acquisition means (11) for acquiring a control signal representative of a command applied by the user to a control member (3, 8, 10) of the aircraft (1);
- at least one prediction module (22) for predicting, on the computation date (T), at least one component of the short-term flight path of the aircraft (1);

**characterized in that** the or each prediction module (22) is further suitable for computing, from the control signal, an estimate, between the computation date (T) and a subsequent prediction date (T'), of at least one time derivative of the or each predicted component, the or each estimated time derivative depending on the subsequent prediction date (T') and on the displacement of each primary control member (3, 8, 10).

**10.** An aircraft (1) guidance method, **characterized in that** it includes the following steps:

- predicting a short-term flight path using the method according to any one of claims 1 to 7;
- enslaving at least one component of the aircraft (1) flight path relative to the corresponding component of the predicted flight path.

**11.** The method according to claim 10, **characterized in that** the or each predicted component of the flight path is no longer modified during the enslavement step and then forms an instruction designed to be sent to an enslavement device (6) for the flight path of the aircraft (1).

**12.** The method according to claim 10 or 11, **characterized in that** the or each primary control member (3, 8, 10) is associated with at least one component of the flight path, **in that** the or each primary control member (3, 8, 10) has a neutral zone, the neutral zone representing a predefined displacement range of the primary control member (3, 8, 10) around a predetermined position of the primary control member (3, 8, 10), and
and **in that**, when a primary control member (3, 8, 10) is positioned in the neutral position in one or more directions, the component(s) of the flight path of the aircraft (1) associated with said directions are enslaved relative to the corresponding predicted component of the short-term flight path.

**13.** An aircraft (1) guidance system (2), **characterized in that** it includes:

- a prediction device (5) according to claim 9, able to predict a short-term flight path of the aircraft (1);
- an enslavement device (6) able to enslave the flight path of the aircraft (1) relative to the predicted short-term flight path.

**14.** An aircraft, **characterized in that** it includes at least one control member (3, 8, 10) and a prediction device (5) according to claim 9 to predict the short-term flight path of the aircraft (1) from a command applied by a user to the or each control member (3, 8, 10).

**15.** The aircraft according to claim 14, **characterized in that** it further includes an enslavement device (6) to enslave the short-term flight path of the aircraft (1) relative to the predicted short-term flight path.

1
2
5
3
8
11
14
16
22
22
22
10
11
6
4
12
22
-26-
-32-
-34-
-36-
-38-
-40-
-42-
30
24
28

FIG.1

FIG.2

Acquisition
100
Prédiction de la trajectoire
105
Affichage de la trajectoire
140
145
Organe au neutre ?
Non
Oui
Commande de la trajectoire
150

FIG.3

105
Conversion
110
Estimation
115
Emission
120
Correction
125
Intégration
130
Prédiction d'une composante de la trajectoire
135

FIG.4

X₁
θ
Ψ
Ψ
Y₀
X₀
Φ
A
Y₁
Z₁
Z₀
θ
Φ

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 8086362 B2
- US 5920321 A